# EUROPÄISCHE PATENTSCHRIFT

(11) **EP 3 224 912 B1**
(45) Veröffentlichungstag und Bekanntmachung des Hinweises auf die Patenterteilung: **26.09.2018**
(21) Anmeldenummer: 15797598.8
(22) Anmeldetag: 17.11.2015
(51) Int. Cl.: H01R 13/6463, H01R 13/6473, H04B 3/30

(54) **WINKELVERBINDER ZUR DIFFERENTIELLEN ÜBERTRAGUNG VON DATENSIGNALEN**
ANGLE CONNECTOR FOR DIFFERENTIAL TRANSMISSION OF DATA SIGNALS
CONNECTEUR D'ANGLE POUR LA TRANSMISSION DIFFÉRENTIELLE DE SIGNAUX DE DONNÉES

(30) Priorität: 28.11.2014 DE 202014009499 U
(43) Veröffentlichungstag der Anmeldung: 04.10.2017
(73) Patentinhaber: Rosenberger Hochfrequenztechnik GmbH & Co. KG, 83413 Fridolfing (DE)
(72) Erfinder: ROSENBERGER, Bernd, 84529 Tittmoning (DE)
(74) Vertreter: Zeitler Volpert Kandlbinder Patent- und Rechtsanwälte Partnerschaft mbB
(86) Internationale Anmeldenummer: PCT/EP2015/002297
(87) Internationale Veröffentlichungsnummer: WO 2016/082920

(56) Entgegenhaltungen:
- DE-U1-202014 008 844
- US-A1- 2012 289 095

## Beschreibung

Die vorliegende Erfindung betrifft Winkelverbinder gemäß dem Oberbegriff des Anspruchs 1.

In großen Rechneranlagen ist es üblich, dass jeweils mehrere, jeweils einen Server ausbildende Rechnerplatinen in Form von bestückten Leiterplatten, auch "Blades" genannt, über Einsteckeinschübe mit einer sogenannten "Backplane", welche selbst wieder eine bestückte Leiterplatte darstellt, elektrisch und mechanisch verbunden werden. Hierzu sind Winkelverbinder vorgesehen, die einerseits Steckverbinder bzw. Anschlussstellen auf den Blades und andererseits Steckverbinder bzw. Anschlussstellen an der Backplane kontaktieren, um dadurch entsprechende Datenübertragungskanäle zwischen dem jeweiligen Blade und der zugehörigen Backplane herzustellen.

Hierbei ergeben sich jedoch verschiedenartige Schwierigkeiten für die elektrische Verbindung über die Winkelverbinder, die die Übertragungseigenschaften für Hochfrequenzsignale der elektrischen Verbindungen beeinträchtigen. So sollen die Leitungen in dem Leiterplattensteckverbinder alle eine identische Impedanz von 85 Ohm aufweisen. Aufgrund der geometrischen Gegebenheiten weisen jedoch nicht alle Leitungen in einem Winkelsteckverbinder eine identische geometrische Länge auf, wenn diese direkt auf dem kürzesten Wege von der ersten zur zweiten Ebene verlaufend angeordnet sind. Es sind jedoch Phasendifferenzen bei der Übertragung von Hochfrequenzsignalen über die Leitungen der Winkelverbinder zu vermeiden, weshalb die Leitungen häufig wellenförmig innerhalb des Winkelverbinders verlegt sind, so dass alle Leitungen eine identische geometrische und damit auch elektrische Länge aufweise. Dies hat jedoch den Nachteil dass nicht an jeder Stelle zwischen zwei benachbarten Leitern aufgrund des wellenförmig sich ändernden Abstandes der gewünschte Wellenwiderstand von 85 Ohm vorhanden ist. Da sich die Leitungen innerhalb eines Leiterplattensteckverbinders gegenseitig beeinflussen, beispielsweise bei der differenziellen Übertragung von Hochfrequenzsignale, kommt es durch diesen wechselnden Wellenwiderstand im Verlauf der Leitungen zu erheblichen Einschränkungen bei der maximal übertragbaren Bandbreite und Bitrate.

Aus der US 2012/0289095 A1 ist Steckverbinder für die differentielle Signalübertragung mit verbesserter Versatzkontrolle ("skew-control") bekannt. Hierbei wird derjenige Leiter, welcher in dem Steckverbinder mit einem kleineren Radius verläuft, wellenförmig verlegt um die gleiche geometrische Länge zu erhalten, wie der zugehörige Leiter, welcher auf einem größeren Radius in dem Steckverbinder verläuft.

Aus der DE 20 2014 008 844 U1 ist ein elektrisches Interface bekannt, das an ein Ende eines Winkelsteckverbinders angeschlossen wird und das einen Laufzeitunterschied von Signalen in verschiedenen Leitern dadurch ausgleicht, dass das Signal aus einer Leitung des Winkelsteckverbinders mit geometrisch kürzerer Länge über eine Ausgleichsstrecke mit entsprechender geometrischer Länge derart geführt wird, dass ein Laufzeitunterschied zu einem Signal einer anderen Leitung des Winkelsteckverbinders ausgeglichen ist.

Der Erfindung liegt die Aufgabe zugrunde, einen Winkelverbinder der o.g. Art dahingehend zu verbessern, dass hohe Bandbreiten und Bitraten bei der Übertragung von Hochfrequenzsignalen über den Winkelverbinder erzielt werden. Diese Aufgabe wird erfindungsgemäß durch einen Winkelverbinder der o.g. Art mit den in Anspruch 1 gekennzeichneten Merkmalen gelöst. Vorteilhafte Ausgestaltungen der Erfindung sind in den weiteren Ansprüchen beschrieben.

Bei einem Winkelverbinder der o.g. Art ist es erfindungsgemäß vorgesehen, dass der Winkelverbinder zwischen der ersten und zweiten Winkelverbinder-Endfläche mindestens einen ersten, gekrümmten Abschnitt aufweist, in dem alle Leiter des Leiterpaares/der Leiterpaare mit ihren jeweiligen Längsachsen parallel zueinander angeordnet sind und alle Längsachsen aller Leiter des Leiterpaares/der Leiterpaare jeweils einer gekrümmten Linie folgen, wobei in dem ersten, gekrümmten Abschnitt die Längsachsen von den Leitern mindestens eines Leiterpaares jeweils einer gekrümmten Linie folgen, die für die beiden Leiter dieses Leiterpaares derart unterschiedlich stark gekrümmt sind, dass in dem ersten, gekrümmten Abschnitt diese beiden Leiter relativ zueinander eine unterschiedliche geometrische Länge aufweisen, wobei der Winkelverbinder mindestens einen zweiten Abschnitt aufweist, in dem alle Leiter des Leiterpaares/der Leiterpaare um einen vorbestimmten Bruchteil einer Schlaglänge sowie mit einer vorbestimmten Ganghöhe miteinander verseilt sind, derart, dass ausgehend von der ersten Winkelverbinder-Endfläche zur zweiten Winkelverbinder-Endfläche alle Leiter des Leiterpaares/der Leiterpaare eine identische, geometrische Länge aufweisen.

Dies hat den Vorteil, dass bei minimaler räumlicher Ausdehnung des Winkelverbinders eine hohe Kanaldichte bzw. Packungsdichte bei gleichzeitig guter Entkopplung der einzelnen Kanäle bzw. Leiterpaare zueinander erzielt wird, wobei gleichzeitig eine Laufzeit von Signalen über alle Leiter im Wesentlichen identisch ist. Auf ein sogenanntes "skew-matching" außerhalb des Winkelverbinders, beispielsweise auf einer mit dem Winkelverbinder elektrisch und mechanisch verbundenen Leiterplatte, kann verzichtet werden, wodurch Verluste bei der Signalübertragung reduziert werden. Gleichzeitig weist der Winkelverbinder an jeder Stelle zwischen der ersten und zweiten Winkelverbinder-Endfläche eine konstante, vorbestimmte Impedanz auf.

Einen besonders einfachen und funktionssicheren geometrischen Längenausgleich für alle Leiter erzielt man dadurch, dass zwei hinsichtlich der Krümmung der Linien identische erste, gekrümmte Abschnitte vorgesehen sind, wobei die Verseilung eine halbe Schlaglänge beträgt und der zweite Abschnitt zwischen den beiden ersten, gekrümmten Abschnitten angeordnet ist, wobei die ersten gekrümmten Abschnitte jeweils ausgehend vom zweiten Abschnitt in entgegengesetzte Richtungen gekrümmt sind. Durch die Verseilung wechseln die Leiter die gekrümmten Linien, denen sie folgen, so dass in dem einem ersten, gekrümmten Abschnitten jeweils derjenige Leiter der geometrisch längeren, gekrümmten Linie folgt, der in dem anderen ersten gekrümmten Abschnitt der geometrisch kürzeren Linie folgte und umgekehrt in dem einem ersten, gekrümmten Abschnitten jeweils derjenige Leiter der geometrisch kürzeren, gekrümmten Linie folgt, der in dem anderen ersten gekrümmten Abschnitt der geometrisch längeren Linie folgte, so dass sich insgesamt die geometrischen Längenunterschiede über die beiden erste, gekrümmte Abschnitte gegenseitig aufheben und alle Leiter über den gesamten Winkelverbinder betrachtet eine identische geometrische Länge aufweisen.

Einen geometrisch besonders einfach gestalteten Winkelverbinder erzielt man dadurch, dass alle Leiter des Leiterpaares/der Leiterpaare jeweils einem jeweiligen Kreisbogen folgen, wobei in dem ersten, gekrümmten Abschnitt die Längsachsen von den Leitern mindestens eines Leiterpaares jeweils einem jeweiligen Kreisbogen mit unterschiedlichem Radius und identischem Mittelpunkt sowie identischem Mittelpunktswinkel folgen.

Einen geometrisch besonders einfachen Aufbau erzielt man dadurch, dass zwei hinsichtlich des Mittelpunktswinkels und der Radien der jeweiligen Leiter identische erste, gekrümmte Abschnitte vorgesehen sind, wobei die Verseilung eine halbe Schlaglänge beträgt und der zweite Abschnitt zwischen den beiden ersten, gekrümmten Abschnitten angeordnet ist, wobei die ersten gekrümmten Abschnitte jeweils ausgehend vom zweiten Abschnitt in entgegengesetzte Richtungen gekrümmt sind.

Einen rechtwinkligen Winkelverbinder erzielt man dadurch, dass die Winkelverbinder-Endflächen um einen Winkel von α = 90° zueinander verkippt sind, wobei die Leiter in den zwei gekrümmten Abschnitten jeweils einen Mittelpunktswinkel von 45° aufweisen.

Einen geometrisch korrekten Aufbau und spannungsfreien Einbau des Winkelverbinders erzielt man dadurch, dass die Summe aller Mittelpunktswinkel eines Leiters zwischen der ersten und der zweiten Winkelverbinder-Endfläche dem Winkel α entspricht.

Eine konstruktiv besonders einfache und leicht herzustellende Verseilung erzielt man dadurch, dass der zweite Abschnitt geradlinig ausgebildet ist. Eine besonders gute Anpassung des Bauraumes des Winkelverbinders an entsprechende Randbedingungen der unmittelbaren Umgebung des Winkelverbinders erzielt man dadurch, dass der zweite Abschnitt gekrümmt ausgebildet ist.

Eine Verbindung von zwei Anschlussstellen über den Winkelverbinder, die nicht parallel zueinander angeordnet sind erzielt man dadurch, dass der vorbestimmten Winkel α einen Wert im Bereich 0° < α < 360° aufweist.

Eine besonders gute elektromagnetische Entkopplung der Signal-Übertragungskanäle erzielt man dadurch, dass zwei Leiterpaare in dem Winkelverbinder angeordnet sind, wobei die Leiter der Leiterpaare in dem verseilten Abschnitt in Form einer Stern-Vierer-Anordnung angeordnet sind.

Eine entsprechende Anpassung des Bauraumes des Winkelverbinders an entsprechende Randbedingungen der unmittelbaren Umgebung des Winkelverbinders sowie an die Lage der mit dem Winkelverbinder zu verbindenden Anschlussstellen erzielt man dadurch, dass der Winkelverbinder mindestens einen geradlinigen Abschnitt aufweist, in dem alle Leiter des Leiterpaares/der Leiterpaare mit ihren jeweiligen Längsachsen parallel zueinander angeordnet sind und geradlinig verlaufen.

Eine besonders gute Anpassung des Winkelverbinders an eine jeweilige Einbausituation erzielt man dadurch, dass die Krümmung der Linien in dem ersten Abschnitt konstant oder variabel ist.

Die Erfindung wird im Folgenden anhand der Zeichnung näher erläutert. Diese zeigt in:
- Fig. 1: eine bevorzugte Ausführungsform eines erfindungsgemäßen Winkelverbinders mit zwei Leiterpaaren in Schnittansicht;
- Fig. 2: eine perspektivische Ansicht einer Winkelverbinder-Endfläche des Winkelverbinders gemäß Fig. 1;
- Fig. 3: eine perspektivische Ansicht nur der Leiter mit Beschichtung einer alternativen Ausführungsform eines erfindungsgemäßen Winkelverbinders und
- Fig. 4: eine perspektivische Ansicht nur der Leiter mit Beschichtung des Winkelverbinders gemäß Fig. 1.

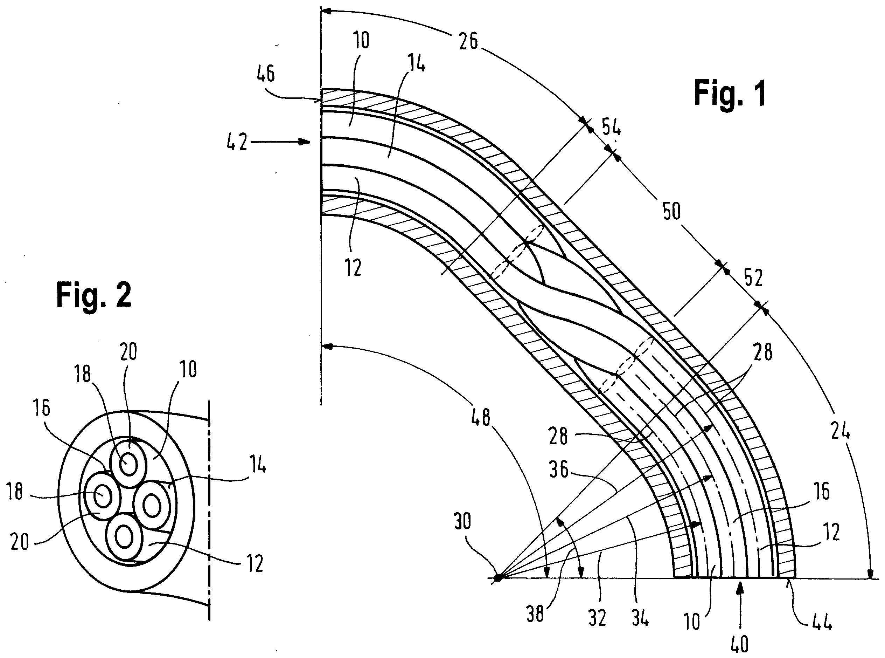

Der in Fig. 1, 2 und 4 dargestellte Winkelverbinder umfasst ein erstes Leiterpaar mit elektrischen Leitern 10 und 12 sowie ein zweites Leiterpaar mit elektrischen Leitern 14 und 16. Die Leiter 10, 12, 14, 16 sind in der Art einer Stern-Vierer-Leitung derart angeordnet, dass sich im Querschnitt gesehen die Leiter an den Ecken eines Rechteckes befinden, wie insbesondere aus Fig. 2 ersichtlich. Jeder Leiter 10, 12, 14, 16 weist einen Kupferdraht 18 mit einem Durchmesser von beispielsweise 0,3 mm sowie eine Beschichtung 20, beispielsweise aus Teflon, auf. Die vier Leiter 10, 12, 14 und 16 sind in einem Dielektrikum eingebettet, welches beispielsweise einen Durchmesser von 1,7 mm aufweist. Das Dielektrikum ist beispielsweise aus dem Werkstoff Polyoxymethylen (Kurzzeichen POM) hergestellt.

Jedes Leiterpaar 10/12 und 14/16 endet mit einem ersten Leiterpaar-Ende 40 in einer ersten, ebenen Winkelverbinder-Endfläche 44 und mit einem zweiten Leiterpaar-Ende 42 in einer zweiten, ebenen Winkelverbinder-Endfläche 46, wobei die erste und zweite Winkelverbinder-Endfläche 44, 46 im Raum relativ zueinander um einen vorbestimmten Winkel α 48 verkippt sind.

Der Winkelverbinder gemäß Fig. 1, 2 und 4 weist zwei gekrümmte erste Abschnitte 24, 26 auf, in dem alle Leiter 10, 12, 14, 16 der Leiterpaare mit ihren jeweiligen Längsachsen 28 parallel zueinander angeordnet sind.

In dem gekrümmten ersten Abschnitt 24 folgen alle Längsachsen 28 aller Leiter 10, 12, 14, 16 der Leiterpaare jeweils einem jeweiligen Kreisbogen mit einem Mittelpunkt 30, einem Radius R₁ 32, R₂ 34, R₃ 36 und einem Mittelpunktswinkel 38. Alle Längsachsen 28 folgen jeweils einem Kreisbogen mit identischem Mittelpunkt 30 und identischem Mittelpunktswinkel 38, jedoch teilweise unterschiedlichem Radius R₁ 32, R₂ 34, R₃ 36. So folgen die Längsachsen 28 der Leiter 14, 16 des einen Leiterpaares einem Kreisbogen mit identischem Radius R₂ 34. Dagegen folgen die Leiter 10 und 12 des anderen Leiterpaares jeweils einem Kreisbogen mit unterschiedlichem Radius. Der Leiter 10 folgt einem Kreisbogen mit dem Radius R₁ 32 und der Leiter 12 folgt einem Kreisbogen mit dem Radius R₃ 36. Mit anderen Worten verläuft der Leiter 10 in dem gekrümmten ersten Abschnitt 24 auf einer Innenbahnen, während der Leiter 12 auf einer Außenbahn verläuft. Dementsprechend haben die Leiter 10 und 12 eine unterschiedliche geometrische Länge in dem gekrümmten ersten Abschnitt 24.

Wie aus Fig. 1 ersichtlich, verbindet der erfindungsgemäße Winkelverbinder zwei Winkelverbinder-Endflächen 44 und 46 die um einen Winkel α = 90° relativ zueinander verkippt sind. Der gekrümmte erste Abschnitt 24 weist einen Mittelpunktswinkel 38 von 45° auf. Dementsprechend muss der andere (zweite) gekrümmte erste Abschnitt 26 ebenfalls einen Mittelpunktswinkel 38 von 45° aufweisen, damit die zweite Endfläche 46 erreicht wird. Außerdem muss der andere (zweite) gekrümmte erste Abschnitt 26 eine gleichsinnige Krümmung aufweisen, damit sich die beiden Mittelpunktswinkel der gekrümmten ersten Abschnitte 24 und 26 von jeweils 45° zu einem Gesamtwinkel von 90° addieren.

Würden hierbei die Leiter 10 und 12 unverändert an ihrer Position verbleiben, so würde nochmals der Leiter 10 auf der Innenbahn (innerer Kreisbogen) mit dem kleineren Radius R₁ 32 und der Leiter 12 auf der Außenbahn (äußerer Kreisbogen) verlaufen. Insgesamt wäre die geometrische Länge des Leiters 10 von der ersten Endfläche 44 zur zweiten Endfläche 46 betrachtet wesentlich kürzer als die geometrische Länge des Leiters 12 in diesem Bereich. Dies würde zu unerwünschten Laufzeitunterschieden von elektrischen Signalen führen, die über die Leiter 10 und 12 übertragen werden.

Erfindungsgemäß ist ein zweiter Abschnitt 50 vorgesehen, in dem die Leiter 10, 12, 14, 16 über eine vorbestimmte Schlaglänge in der Art einer Stern-Vierer-Leitung miteinander verseilt sind. In diesem Abschnitt 50 verlaufen die Längsachsen 28 der Leiter 10, 12, 14, 16 nicht parallel zueinander. Hierbei beträgt die Verseilung in der beispielhaften Ausführungsform gemäß Fig. 1, 2 und 4eine halbe Schlaglänge. Hierdurch wechseln alle Leiter 10, 12, 14, 16 ihre Position innerhalb des Winkelverbinders. Im Querschnitt gesehen, wechseln die Leiter 10, 12, 14 und 16 hierbei ihre Position um 180°. Der Positionswechsel der Leiter 14, 16 führt für beide Leiter 14, 16 zu einer identischen geometrischen Länge des Kreisbogens im gekrümmten ersten Abschnitt 26, die beide auch schon im gekrümmten ersten Abschnitt 24 hatten. Insofern ergibt sich für diese Leiter 14, 16 kein Unterschied zwischen den beiden gekrümmten ersten Abschnitten 24, 26. Anders verhält sich dies jedoch für die Leiter 10, 12. Der Leiter 10 wechselt durch die Verseilung mit halber Schlaglänge auf die Außenbahn, d.h. auf den Kreisbogen mit dem größeren Radius R₃ 36 und der Leiter 12 wechselt durch die Verseilung mit halber Schlaglänge auf die Innenbahn, d.h. auf den Kreisbogen mit dem kleineren Radius R₁ 32. Hierdurch gleichen sich die Lauflängen-Unterschiede für die Leiter 10, 12 zwischen den beiden gekrümmten ersten Abschnitten 24, 26 aus und beide Leiter haben ausgehend von der ersten Endfläche 44 bis zur zweiten Endfläche 46 eine identische geometrische Länge.

Die Verseilung in dem zweiten Abschnitt 50 hat den Vorteil, dass durch die Stern-Vierer-Anordnung eine identische Impedanz über den gesamten Verlauf des zweiten Abschnittes 50 erreicht wird. Mit anderen Worten hat der Ausgleich der geometrischen Länge innerhalb des Winkelverbinders keinen Einfluss auf die Impedanz. Diese ist über den gesamten Winkelverbinder konstant. Zusätzlich sind am Winkelverbinder noch geradlinige Abschnitte 52, 54 ausgebildet, in denen die Längsachsen 28 aller Leiter 10, 12, 14, 16 parallel verlaufen. Diese verursachen keine geometrischen Längenunterschiede zwischen den Leitern 10, 12, 14, 16 und sind diesbezüglich daher neutral.

In der dargestellten Ausführungsform weist der Winkelverbinder zwei identisch und gleichsinnig gekrümmte Abschnitte 24, und 26 und ein dazwischen liegender geradliniger Abschnitt 50, 52, 54 auf. Dies ist jedoch lediglich beispielhaft. Es kann auch nur ein gekrümmter Abschnitt 24 vorgesehen sein und der Abschnitt 50 mit der Verseilung kann ebenfalls gekrümmt sein. Hierbei ist lediglich der Anteil der Schlaglänge der Verseilung derart anzupassen, dass eine identische geometrische Länge für alle Leiter 10, 12, 14, 16 zwischen der ersten und zweiten Endfläche 44, 46 vorliegt.

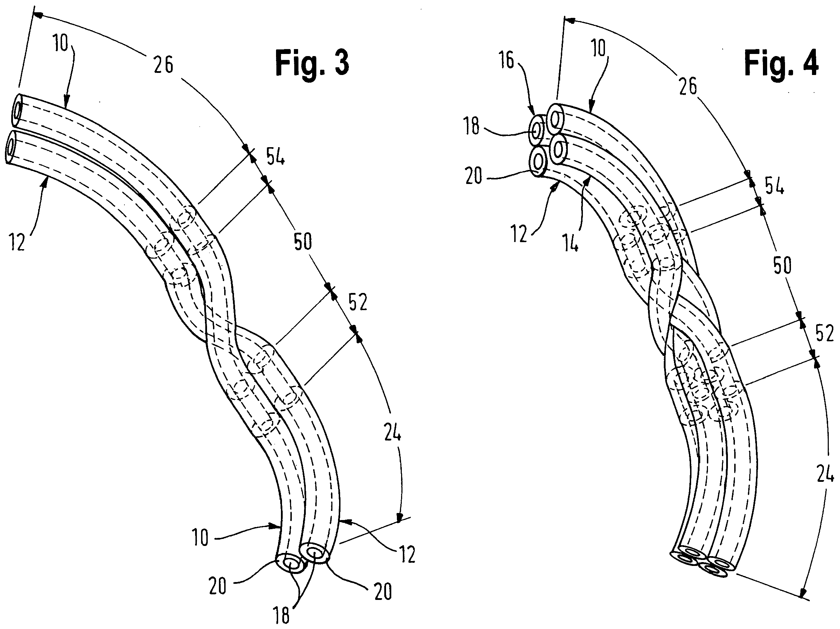

Weiterhin kann auch lediglich ein Leiterpaar 10, 12 vorgesehen sein, wie in Fig. 3 dargestellt. Auch hier wechseln die Leiter 10, 12 durch die Verseilung in dem zweiten Abschnitt 50 von der Außen- auf die Innenbahn und umgekehrt, so dass in der Summe eine identische geometrische Länge für alle Leiter 10, 12 erzielt wird.

Die Verseilung in dem zweiten Abschnitt 50 erfolgt mit einer vorbestimmten Ganghöhe. Die Ganghöhe entspricht der Länge einer Schlaglänge, d.h. einer axialen Länge, in der die Leiter 10, 12, 14, 16 einmal um 360° miteinander verseilt sind. In dem ersten Ausführungsbeispiel gemäß Fig. 1, 2 und 4entspricht die Ganghöhe der doppelten Länge des zweiten Abschnittes 50.

Der Bruchteil der Schlaglänge der Verseilung richtet sich danach, wie groß der Unterschied der geometrischen Längen zwischen zwei gekrümmten Abschnitten ist, der auszugleichen ist. Nur wenn die beiden gekrümmten Abschnitte 24, 26 identisch sind, wie in dem Ausführungsbeispiel gemäß Fig. 1, 2 und 4, ergibt sich für die Ganghöhe eine halbe Schlaglänge. Falls beispielsweise der Mittelpunktswinkel der beiden gekrümmten Abschnitte 24, 26 nicht identisch ist, oder falls nur ein gekrümmter erster Abschnitt 24 vorhanden und der zweite Abschnitt 50 zusätzlich gekrümmt ist, wird ein anderer Bruchteil der Schlaglänge für die Verseilung zu verwenden sein.

Mit anderen Worten weist der erfindungsgemäße Winkelverbinder einen ersten gekrümmten Abschnitt 24 auf, in dem mindestens zwei Leiter 10, 12 eines Leiterpaares aufgrund der Krümmung dieses ersten Abschnittes eine unterschiedliche geometrische Länge in diesem ersten Abschnitt aufweisen. Durch die Verseilung in dem zweiten Abschnitt werden die unterschiedlichen geometrischen Längen kompensiert, so dass alle Leiter 10, 12, 14, 16 über die gesamte Länge des Winkelverbinders betrachtet eine identische geometrische Länge aufweisen. Die Kompensation beruht dabei auf einem Platzwechsel der Leiter 10, 12, 14, 16 innerhalb des Winkelverbinders, so dass die Leiter komplementäre geometrische Längendifferenzen haben, wie in dem ersten gekrümmten Abschnitt. Hierbei kann der zweite Abschnitt 50 selbst gekrümmt sein und/oder es ist ein weiterer erster Abschnitt 26 vorgesehen mit identischer Krümmung, wie der erste Abschnitt 24.

Die Kompensation durch die Verseilung bietet dabei den besonderen Vorteil, dass trotz Platzwechsel der Leiter 10, 12, 14, 16 innerhalb des Winkelverbinders keine Veränderung der Impedanz in dem Bereich des Platzwechseln der Leiter, also dem Bereich der Verseilung, erfolgt, sondern im Gegenteil, die Impedanz auch entlang der Verseilung in jeder beliebigen Schnittebene senkrecht zum Winkelverbinder betrachtet einen identischen konstanten Wert von beispielsweise 85 Ohm aufweist, wie auch in dem übrigen Bereich des Winkelverbinders ohne Verseilung. Dies wird beispielsweise durch die Anordnung der Leiter 10, 12, 14, 16 in der Art einer Stern-Vierer-Leitung an den Ecken eines im Querschnitt des Winkelverbinders gedachten Quadrates erzielt.

## Patentansprüche

1. Winkelverbinder mit mindestens einem Leiterpaar zum differentiellen Übertragen von Datensignalen, wobei jedes Leiterpaar mit einem ersten Leiterpaar-Ende (40) in einer ersten, ebenen Winkelverbinder-Endfläche (44) und mit einem zweiten Leiterpaar-Ende (42) in einer zweiten, ebenen Winkelverbinder-Endfläche (46) endet, wobei die erste und zweite Winkelverbinder-Endfläche (44, 46) im Raum relativ zueinander um einen vorbestimmten Winkel α (48) verkippt sind,
**dadurch gekennzeichnet,**
**dass** der Winkelverbinder zwischen der ersten und zweiten Winkelverbinder-Endfläche (44, 46) mindestens einen ersten, gekrümmten Abschnitt (24) aufweist, in dem alle Leiter (10, 12, 14, 16) des Leiterpaares/der Leiterpaare mit ihren jeweiligen Längsachsen (28) parallel zueinander angeordnet sind und alle Längsachsen (28) aller Leiter (10, 12, 14, 16) des Leiterpaares/der Leiterpaare jeweils einer gekrümmten Linie folgen, wobei in dem ersten, gekrümmten Abschnitt (24) die Längsachsen (28) von den Leitern (10, 12, 14, 16) mindestens eines Leiterpaares (10, 12) jeweils unterschiedlich gekrümmten Linien folgen, die für die beiden Leiter dieses Leiterpaares (10, 12) derart unterschiedlich stark gekrümmt sind, dass in dem ersten, gekrümmten Abschnitt (24) diese beiden Leiter (10, 12) relativ zueinander eine unterschiedliche geometrische Länge aufweisen, wobei der Winkelverbinder mindestens einen zweiten Abschnitt (50) aufweist, in dem alle Leiter (10, 12, 14, 16) des Leiterpaares/der Leiterpaare um einen vorbestimmten Bruchteil einer Schlaglänge sowie mit einer vorbestimmten Ganghöhe miteinander verseilt sind, derart, dass ausgehend von der ersten Winkelverbinder-Endfläche (44) zur zweiten Winkelverbinder-Endfläche (46) alle Leiter (10, 12, 14, 16) des Leiterpaares/der Leiterpaare eine identische, geometrische Länge aufweisen.

2. Winkelverbinder nach Anspruch 1, **dadurch gekennzeichnet, dass** zwei hinsichtlich der Krümmung der Linien identische erste, gekrümmte Abschnitte (24, 26) vorgesehen sind, wobei die Verseilung eine halbe Schlaglänge beträgt und der zweite Abschnitt (50) zwischen den beiden ersten, gekrümmten Abschnitten (24, 26) angeordnet ist, wobei die ersten gekrümmten Abschnitte (24, 26) jeweils ausgehend vom zweiten Abschnitt (50) in entgegengesetzte Richtungen gekrümmt sind.

3. Winkelverbinder nach Anspruch 1 oder 2, **dadurch gekennzeichnet, dass** alle Leiter (10, 12, 14, 16) des Leiterpaares/der Leiterpaare jeweils einem jeweiligen Kreisbogen folgen, wobei in dem ersten, gekrümmten Abschnitt (24) die Längsachsen (28) von den Leitern (10, 12, 14, 16) mindestens eines Leiterpaares (10, 12) jeweils einem jeweiligen Kreisbogen mit unterschiedlichem Radius (32, 36) und identischem Mittelpunkt (30) sowie identischem Mittelpunktswinkel (38) folgen.

4. Winkelverbinder nach Anspruch 2 oder 3, **dadurch gekennzeichnet, dass** zwei hinsichtlich des Mittelpunktswinkels (38) und der Radien (32, 34, 36) der jeweiligen Leiter (10, 12, 14, 16) identische erste, gekrümmte Abschnitte (24, 26) vorgesehen sind, wobei die Verseilung eine halbe Schlaglänge beträgt und der zweite Abschnitt (50) zwischen den beiden ersten, gekrümmten Abschnitten (24, 26) angeordnet ist, wobei die ersten gekrümmten Abschnitte (24, 26) jeweils ausgehend vom zweiten Abschnitt (50) in entgegengesetzte Richtungen gekrümmt sind.

5. Winkelverbinder nach Anspruch 4, **dadurch gekennzeichnet, dass** die Winkelverbinder-Endflächen (44. 46) um einen Winkel von α = 90° zueinander verkippt sind, wobei die Leiter (10, 12, 14, 16) in den zwei gekrümmten Abschnitten (24, 26) jeweils einen Mittelpunktswinkel von 45° aufweisen.

6. Winkelverbinder nach mindestens einem der Ansprüche 3 bis 5, **dadurch gekennzeichnet, dass** die Summe aller Mittelpunktswinkel (38) eines Leiters (10, 12, 14, 16) zwischen der ersten und der zweiten Winkelverbinder-Endfläche (44, 46) dem Winkel α (48)entspricht.

7. Winkelverbinder nach mindestens einem der vorhergehenden Ansprüche,
**dadurch gekennzeichnet, dass** der zweite Abschnitt (50) geradlinig oder gekrümmt ausgebildet ist.

8. Winkelverbinder nach mindestens einem der vorhergehenden Ansprüche,
**dadurch gekennzeichnet, dass** der vorbestimmten Winkel α (48) einen Wert im Bereich 0° < α < 360° aufweist.

9. Winkelverbinder nach mindestens einem der vorhergehenden Ansprüche,
**dadurch gekennzeichnet, dass** zwei Leiterpaare in dem Winkelverbinder angeordnet sind, wobei die Leiter (10, 12, 14, 16) der Leiterpaare in dem verseilten Abschnitt in Form einer Stern-Vierer-Anordnung angeordnet sind.

10. Winkelverbinder nach mindestens einem der vorhergehenden Ansprüche,
**dadurch gekennzeichnet, dass** der Winkelverbinder mindestens einen geradlinigen Abschnitt (52, 54) aufweist, in dem alle Leiter (10, 12, 14, 16) des Leiterpaares/der Leiterpaare mit ihren jeweiligen Längsachsen (28) parallel zueinander angeordnet sind und geradlinig verlaufen.

11. Winkelverbinder nach mindestens einem der vorhergehenden Ansprüche,
**dadurch gekennzeichnet, dass** die Krümmung der Linien in dem ersten Abschnitt (24) konstant oder variabel ist.

## Claims

1. Angle connector comprising at least one conductor pair for differential transmission of data signals, wherein each conductor pair ends with a first conductor pair end (40) in a first flat angle connector end surface (44) and with a second conductor pair end (42) in a second flat angle connector end surface (46), wherein the first and second angle connector end surfaces (44, 46) are tilted spatially relative to one another at a predetermined angle α (48),
**characterised in that**
between the first and the second angle connector end surfaces (44, 46), the angle connector has at least one first curved section (24) in which all conductors (10, 12, 14, 16) of the conductor pair(s) are arranged with the respective longitudinal axes (28) thereof parallel to one another and all longitudinal axes (28) of all conductors (10, 12, 14, 16) of the conductor pair(s) follow a curved line, wherein in the first curved section (24), the longitudinal axes (28) of the conductors (10, 12, 14, 16) of at least one conductor pair (10, 12) follow differently curved lines, which are curved to varying degrees for the two conductors of said conductor pair (10, 12) in such a way that, in the first curved section (24), said two conductors (10, 12) have different geometric lengths relative to one another, wherein the angle connector has at least one second section (50) in which all conductors (10,12, 14, 16) of die conductor pair(s) are twisted with one another for a predetermined fraction of a lay length and at a predetermined pitch in such a way that, starting from the first angle connector end surface (44) to the second angle connector end surface (46), all conductors (10, 12, 14, 16) of the conductor pair(s) have an identical geometric length.

2. Angle connector according to claim 1, **characterised in that** two first curved sections (24, 26) are provided which are identical in terms of the curvature of the lines, wherein the stranding amounts to half a lay length and the second section (50) is arranged between the two first curved sections (24, 26), wherein the first curved sections (24, 26), in each case starting out from the second section (50), are curved in opposite directions..

3. Angle connector according to claim 1 or 2, **characterised in that** all conductors (10, 12, 14, 16) of the conductor pair(s) each follow a respective circular arc, wherein in the first curved section (24) the longitudinal axes (28) of the conductors (10, 12, 14, 16) of at least one conductor pair (10, 12) each follow a respective circular arc with different radius (32,36) and identical centre point (30) as well as identical centre angle (38).

4. Angle connector according to claim 2 or 3, **characterised in that** two first curved sections (24, 26) are provided which are identical in terms of the centre angle (38) and the radii (32, 34, 36) of the respective conductors (10, 12, 14, 16), wherein the stranding amounts to half a lay length and the second section (50) is arranged between the two first curved sections (24, 26), wherein the first curved sections (24, 26), in each case starting out from second section (50), are curved in opposite directions.

5. Angle connector according to claim 4, **characterised in that** the angle connector end surfaces (44, 46) are tilted relative to one another at an angle of α = 90°, wherein the conductors (10, 12, 14, 16) in each case have a centre angle of 45° in the two curved sections (24, 26).

6. Angle connector according to at least one of the claims 3 to 5, **characterised in that** the total of all centre angles (38) of a conductor (10, 12, 14, 16) between the first and the second angle connector end surface (44, 46) corresponds to the angle α (48).

7. Angle connector according to at least one of the preceding claims,
**characterised in that** the second section (50) is formed in a straight line or is curved.

8. Angle connector according to at least one of the preceding claims,
**characterised in that** the predetermined angle α (48) has a value in the range 0° < α < 360°.

9. Angle connector according to at least one of the preceding claims,
**characterised in that** two conductor pairs are arranged in the angle connector, wherein the conductors (10, 12, 14, 16) of the conductor pairs are arranged in the stranded section in the form of a star quad arrangement.

10. Angle connector according to at least one of the preceding claims,
**characterised in that** the angle connector contains at least one section (52, 54) running in a straight line in which all conductors (10, 12, 14, 16) of the conductor pair(s) are arranged with their respective longitudinal axes (28) parallel to one another and run in a straight line.

11. Angle connector according to at least one of the preceding claims,
**characterised in that** the curvature of the lines in the first section (24) is constant or variable.

## Revendications

1. Connecteur d'angle pourvu d'au moins une paire de conducteurs pour la transmission différentielle de signaux de données, chaque paire de conducteurs se terminant par une première extrémité (40) de paire de conducteurs dans une première surface d'extrémité plane (44) du connecteur d'angle et par une seconde extrémité (42) de paire de conducteurs dans une seconde surface d'extrémité plane (46) du connecteur d'angle, la première et la seconde surface d'extrémité (44, 46) du connecteur d'angle étant inclinée dans l'espace l'une par rapport à l'autre d'un angle prédéterminé α (48),
**caractérisé en ce que**
entre la première et la seconde surface d'extrémité (44, 46) du connecteur d'angle, le connecteur d'angle présente au moins une première portion incurvée (24) dans laquelle tous les conducteurs (10, 12, 14, 16) de la paire de conducteurs / des paires de conducteurs ont leurs axes longitudinaux respectifs (28) agencés parallèlement les uns aux autres, et tous les axes longitudinaux (28) de tous les conducteurs (10, 12, 14, 16) de la paire de conducteurs / des paires de conducteurs suivent chacun une ligne incurvée, et dans la première portion incurvée (24) les axes longitudinaux (28) des conducteurs (10, 12, 14, 16) d'au moins une paire de conducteurs (10, 12) suivent des lignes incurvées respectives ayant différentes courbures qui, pour les deux conducteurs de cette paire de conducteurs (10, 12), sont des courbures si fortement différentes que dans la première portion incurvée (24) ces deux conducteurs (10, 12) présentent différentes longueurs géométriques l'un par rapport à l'autre, le connecteur d'angle comprenant au moins une seconde portion (50) dans laquelle tous les conducteurs (10, 12, 14, 16) de la paire de conducteurs / des paires de conducteurs sont toronnés d'une fraction prédéterminée d'une longueur de pas et avec une hauteur de pas prédéterminée de telle sorte qu'à partir de la première surface extrémité (44) du connecteur d'angle jusqu'à la seconde surface d'extrémité (46) du connecteur d'angle tous les conducteurs (10, 12, 14, 16) de la paire de conducteurs / des paires de conducteurs présentent une longueur géométrique identique.

2. Connecteur d'angle selon la revendication 1, **caractérisé en ce qu'**il est prévu deux premières portions incurvées (24, 26) identiques à l'égard de la courbure des lignes, le toronnage étant d'une demi-longueur de pas et la seconde portion (50) étant agencée entre les deux premières portions incurvées (24, 26), les premières portions incurvées (24, 26) étant incurvées chacune à partir de la seconde portion (50) dans des directions opposées.

3. Connecteur d'angle selon la revendication 1 ou 2, **caractérisé en ce que** tous les conducteurs (10, 12, 14, 16) de la paire de conducteurs / des paires de conducteurs suivent chacun un arc de cercle respectif, et dans la première portion incurvée (24) les axes longitudinaux (28) des conducteurs (10, 12, 14, 16) d'au moins une paire de conducteurs (10, 12) suivent un arc de cercle respectif avec des rayons différents (32, 36) et avec un centre (30) identique ainsi qu'avec un angle au centre (38) identique.

4. Connecteur d'angle selon la revendication 2 ou 3, **caractérisé en ce qu'**il est prévu deux premières portions incurvées (24, 26) identiques à l'égard de l'angle au centre (38) et des rayons (32, 34, 36) des conducteurs respectifs (10, 12, 14, 16), le toronnage étant d'une demi-longueur de pas, et la seconde portion (50) est agencée entre les deux premières portions incurvées (24, 26), les premières portions incurvées (24, 26) étant incurvées chacune à partir de la seconde portion (50) dans des directions opposées.

5. Connecteur d'angle selon la revendication 4, **caractérisé en ce que** les surfaces d'extrémité (44, 46) du connecteur d'angle sont inclinées l'une par rapport à l'autre d'un angle α = 90°, les conducteurs (10, 12, 14, 16) présentant chacun un angle au centre de 45° dans les deux portions incurvées (24, 26).

6. Connecteur d'angle selon l'une des revendications 3 à 5, **caractérisé en ce que** la somme de tous les angles au centre (38) d'un conducteur (10, 12, 14, 16) entre la première et la seconde surface d'extrémité (44, 46) du connecteur d'angle correspond à l'angle α (48).

7. Connecteur d'angle selon l'une au moins des revendications précédentes, **caractérisé en ce que** la seconde portion (50) est réalisée rectiligne ou incurvée.

8. Connecteur d'angle selon l'une au moins des revendications précédentes, **caractérisé en ce que** l'angle prédéterminé α (48) présente une valeur dans la plage de 0° < α < 360°.

9. Connecteur d'angle selon l'une au moins des revendications précédentes, **caractérisé en ce que** deux paires de conducteurs sont agencées dans le connecteur d'angle, les conducteurs (10, 12, 14, 16) des paires de conducteurs dans la portion toronnée étant réalisés sous la forme d'un agencement en quarte étoile.

10. Connecteur d'angle selon l'une au moins des revendications précédentes, **caractérisé en ce que** le connecteur d'angle présente au moins une portion rectiligne (52, 54) dans laquelle tous les conducteurs (10, 12, 14, 16) de la paire de conducteurs / des paires de conducteurs ont leurs axes longitudinaux respectifs (28) parallèles les uns aux autres et s'étendent en forme rectiligne.

11. Connecteur d'angle selon l'une au moins des revendications précédentes, **caractérisé en ce que** la courbure des lignes dans la première portion (24) est constante ou variable.
